# EUROPEAN PATENT SPECIFICATION

(11) **EP 1 681 890 B1**
(45) Date of publication and mention of the grant of the patent: **01.03.2017**
(21) Application number: 06000119.5
(22) Date of filing: 04.01.2006
(51) Int. Cl.: H04L 29/06, H04W 8/18, H04W 12/06, H04W 88/02

(54) **Electronic device mounted on terminal equipment**
Elektronisches Gerät befestigt an einem Endgerät
Dispositif éléctronique monte sur un équipement terminal

(30) Priority: 13.01.2005 JP 2005006470
(43) Date of publication of application: 19.07.2006
(73) Proprietor: Kabushiki Kaisha Toshiba, Tokyo 105-8001 (JP)
(72) Inventor: Ishibashi, Takanobu c/o Intell. Property Division, Minato-ku, Tokyo 105-8001 (JP)
(74) Representative: Kramer Barske Schmidtchen Patentanwälte PartG mbB

(56) References cited:
- EP-A- 1 190 399
- US-A- 5 933 773
- US-A- 6 148 192

## Description

This invention relates to an electronic device such as an IC card mounted on a terminal equipment such as a mobile telephone having a communication function via a communication network, a terminal equipment on which the electronic device is mounted and a communication system, for example.

Recently, a system in which a communication company provides various services for the terminal equipment of the user has been proposed or put into practice. As one application form of the system, a system in which various services are provided from the communication company side for the terminal equipment on which an IC card having a user's personal authentication function is mounted is proposed. In the above application form, the IC card performs the authentication process for the terminal equipment and the system of the communication company side. When the authentication process for the terminal equipment and the system of the communication company side is successfully performed, the system of the communication company side provides various services for the terminal equipment having the IC card mounted thereon.

As a concrete example of the above system, a system in which various services are provided from the communication company side for the mobile telephone on which an IC card called a subscriber identity module (SIM) card or universal subscriber identity module (USIM) card is mounted is provided. For example, in many countries, the Global System for Mobile Communications (GSM) system is adopted as a mobile telephone system. In the GSM system, it is indispensable to provide a SIM card which is one type of the IC card in the mobile telephone. Further, in Japan, recently, mobile telephones adopting the Third Generation Partnership Project (3GPP) standard have gradually become popular. In a mobile telephone of the 3GPP standard, a USIM card is indispensable as an IC card.

The SIM card or USIM card used in the GSM system or 3GPP standard is used with the card inserted in the mobile telephone. In the SIM card or USIM card, authentication information used for connection with the system of the communication company is recorded. In the mobile telephone on which the SIM card or USIM card is mounted, authentication of the communication company is made by use of information recorded in the SIM card or USIM card. If the authentication process is successfully performed, it becomes possible for the mobile telephone to receive various services provided by the communication company.

Further, for authentication of the mobile telephone and communication company, for example, the technique for performing an authentication process based on an information table of device information held in a memory which is mounted on the mobile telephone is disclosed in Jpn. Pat. Appln. KOKAI Publication No. 2004-133848.

However, in the conventional system described above, there occurs a problem that it is impossible to attain sufficient security against unauthorized use based on unjust reconstruction of the terminal equipment or falsification of data in connection with multi-functionalization of the terminal equipment and diversification of services.

Particularly, in recent years, it has become popular to perform electronic transactions by use of terminal equipment. For example, various services utilizing an electronic money function or an electronic settlement account function by the mobile telephone are proposed. It is necessary to provide the above services under highly advanced security. Therefore, it is desired to safely and efficiently perform the authentication process for the mobile telephone.

The disclosure US 6 148 192 A discloses an IC card adapted to be mounted on a main body of a terminal equipment having a function of communication with an external system comprising a memory adapted for storing authentication information and an equipment authenticating section adapted for performing authentication with the terminal equipment based on the authentication information stored in the memory. The disclosure EP 1 190 399 A discloses mutual authentication between a SIM card and a second card, both mounted on a terminal equipment.

### Summary of the invention

One aspect of the present invention is an IC card as defined in independent claim 1. Another aspect of the invention is a terminal equipment as defined in independent claim 5. A communication system comprising the terminal equipment is specified in claim 5. Further embodiments of the invention are specified in the respective appended dependent claims.

An object of this invention is to provide an IC card,

The invention can be more fully understood from the following detailed description when taken in conjunction with the accompanying drawings, in which:
FIG. 1 is a view schematically showing an example of the configuration of a communication system according to one embodiment of this invention;
FIG. 2 is a view schematically showing an example of the configuration of a mobile telephone as a terminal equipment;
FIG. 3 is a view showing an example of the configuration of an IC card mounted on a mobile telephone;
FIG. 4 is a diagram showing the functional configuration of an IC card;
FIG. 5 is a flowchart for illustrating a first operation example;
FIG. 6 is a flowchart for illustrating an example of the mutual authentication process;
FIG. 7 is a flowchart for illustrating a second operation example; and
FIG. 8 is a flowchart for illustrating the second operation example.

There will now be described preferred embodiments of this invention with reference to the accompanying drawings.

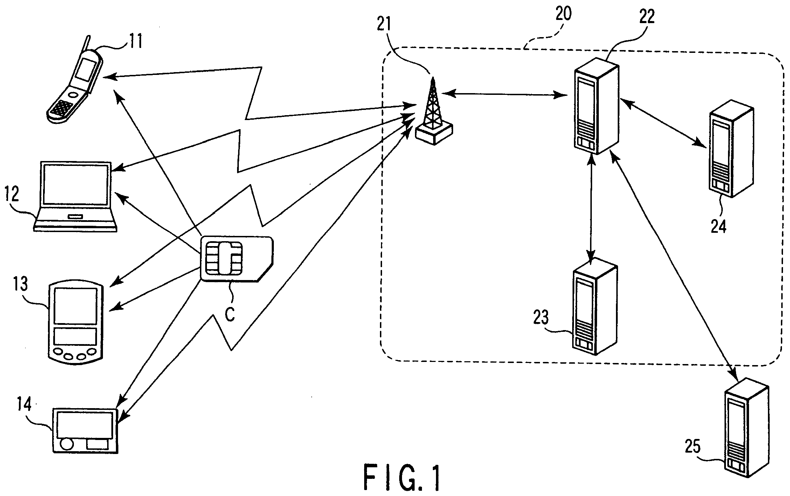

FIG. 1 is a view schematically showing an example of the configuration of a communication system including terminal equipment according to one embodiment of this invention.

In the communication system shown in FIG. 1, a mobile telephone 1 used as terminal equipment having an IC card C mounted thereon, a personal computer 12, a mobile information terminal (which is hereinafter referred to as a PDA) 13 and an electronic game machine 14 make communication with a system (communication company system) 20 of a communication company.

The IC card C is an electronic device including an LSI having a control element, memory and interface. The IC card C holds various control programs, data and the like. For example, authentication data, personal information of the user and the like are stored in the IC card. The IC card has a function of mutual authentication for terminal equipment, a function of mutual authentication for a system of a communication company and a function of mutual authentication for equipment connected to the terminal equipment and various modules in the terminal equipment as will be described later.

The terminal equipment 11, 12, 13, 14 have functions of making communications with the communication company system 20. The terminal equipment 11, 12, 13, 14 communicate with the communication company system 20 with the IC cards C set therein. Further, each of the terminal equipment holds information (device certificate) which authenticates its own device, key information as authentication information, preset encoding logic and the like.

The communication company system 20 has a communication facility 21, over-the-air (OTA) server 22, management server 23, authentication server 24 and the like. The communication facility 21 is used to communicate with the terminal equipment 11, 12, 13, 14. The OTA server 22 is a server device which controls communication with the above terminal equipment via the communication facility 21. The management server 23 is a server device which manages data associated with the terminal equipments 11, 12, 13, 14 and IC cards C inserted into the terminal equipment 11, 12, 13, 14. The authentication server 24 is a server device which performs authentication of the IC card C.

An external server 25 is connected to the communication company system 20. The external server 25 is a server device which provides services such as content provided by a company other than the communication company. The external server 25 is connected to the OTA server 22 and provides services such as content for the terminal equipment 11, 12, 13, 14 via the OTA server 22 and communication facility 21.

When the IC card C is inserted into the terminal equipment 11, 12, 13 or 14, the IC card C and terminal equipment 11, 12, 13 or 14 perform the mutual authentication process. If the mutual validities of the terminal equipment 11, 12, 13 or 14 and IC card C are authenticated by the mutual authentication process, the IC card C further performs the authentication process for the communication company system 20. If authentication of the communication company system 20 and IC card C is successfully made, the terminal equipment 11, 12, 13 or 14 is set into a state in which services from the communication company system 20 can be provided.

Next, a case wherein the mobile telephone 11 is used as the terminal equipment is explained as an example in detail.

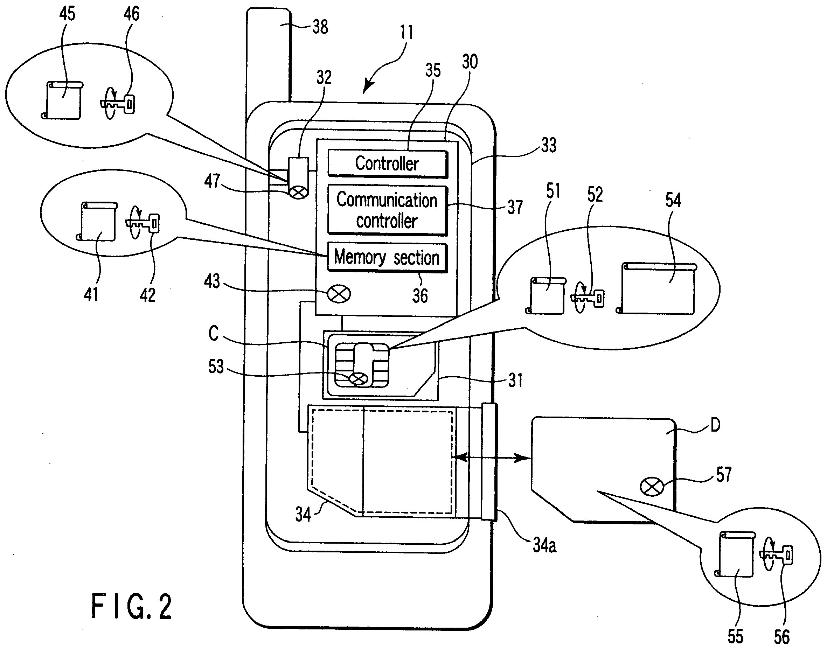

FIG. 2 is a view schematically showing an example of the configuration of the mobile telephone 11 as the terminal equipment.

As shown in FIG. 2, the mobile telephone 11 includes a control unit 30, interface 31, IC chip 32, loop antenna 33, interface section 34 and antenna 38. The IC card C is an electronic device which can be removably mounted on the mobile telephone 11. In FIG. 2, a state in which the IC card C is mounted on the mobile telephone 11 is shown.

The control unit 30 is a unit which controls the whole portion of the mobile telephone 11. The control unit 30 includes a controller 35, memory section 36, communication controller 37, display controller (not shown) and audio controller (not shown).

The controller 35 performs the control process and data process for various portions of the main body of the mobile telephone 11. The controller 35 performs various processes based on programs and control data stored in the memory section 36.

The memory section 36 is configured by a RAM, ROM, nonvolatile memory and the like. In the memory section 36, various data items are stored. For example, in the secure nonvolatile memory in the memory section 36, key information and device information such as authentication information which will be described later are stored.

The communication controller 37 controls communication by use of radio waves transmitted or received via the antenna 38. In the system configuration shown in FIG. 1, the communication controller 37 controls communication with the communication company system 20 via the antenna 38. That is, the communication controller 37 is used to control data communication or telephone communication of the mobile telephone 11.

The IC card C is mounted on the interface 31. The control unit 30 and IC card C perform data communication via the interface 31.

The IC chip 32 is an IC chip which includes a control circuit functioning as a non-contact IC card, memory, interface and the like. The loop antenna 33 is connected to the IC chip 32. The IC chip 32 has a function of radio communication based on a communication system different from the communication system (data communication or telephone communication of the mobile telephone 11) by the communication controller 37. That is, the IC chip 32 has a function of performing radio communication based on the communication system of the non-contact IC card by use of radio waves transmitted or received via the loop antenna 33.

For example, some of general non-contact IC cards are used as electronic money. When an electronic money function realized by use of the above non-contact IC cards is realized in the mobile telephone 11, the same function as that of the non-contact IC card used as electronic money is incorporated into the IC chip 32. In this case, a function of performing the same communication control as that of the non-contact IC card used as electronic money, a function of holding money amount information (electronic value) usable as electronic money and the like are provided in the IC chip 32, for example.

Further, high-degree security is required for the function such as the electronic money function realized by the IC chip 32. Therefore, data which authenticates the validity of the IC chip 32 is stored in the internal memory (not shown) of the IC chip 32.

The interface section 34 is used to mount a device D as an external device such as a memory card on the mobile telephone 11. The device D inserted through an insertion port 34a formed in the main body of the mobile telephone 11 is mounted on the interface section 34. Therefore, the device D inserted through the insertion port 34a is set in a state in which it is connected to the control unit 30 of the mobile telephone 11 via the interface section 34 as shown by dotted lines in FIG. 2. In this case, it is assumed that the device D is a memory device with the security function.

Further, device information 41 and key information 42 used as authentication data are stored in the memory section 36 of the control unit 30. Further, an encoding module 43 is provided in the control unit 30. The encoding module 43 may be realized by permitting the controller 35 to execute a program stored in the memory section 36 used to perform the encoding process and decoding process. The encoding module 43 may be configured by a processor (hardware) which performs the encoding process and decoding process.

The device information 41 is information associated with the main body of the mobile telephone 11. For example, the device information 41 is information such as the basic specification, manufacturing maker, model name and the like of the main body of the mobile telephone 11. Further, the device information 41 is used as authentication data to perform mutual authentication for the IC card C. The key information 42 is key information to perform the authentication process for the IC card C. The encoding module 43 performs an encoding process or decoding process according to an algorithm based on the preset encoding logic.

Further, the IC chip 32 is one example of a module contained in the mobile telephone 11 having a function of mutual authentication for the IC card C. The IC chip 32 has a memory (not shown) in which device information 45 and key information 46 used as authentication data for mutual authentication for the IC card C are stored. Further, an encoding module 47 which performs mutual authentication for the IC card C is provided in the IC chip 32.

The device information 45 is information associated with the function of the non-contact IC which is realized by the IC chip 32. For example, the device information 45 is information such as the basic specification, manufacturing maker, model name and the like of the IC chip 32. Further, the device information 45 is also used as authentication data to perform mutual authentication for the IC card C. The key information 46 is information to perform the authentication process for the IC card C. The encoding module 47 performs an encoding process or decoding process according to an algorithm based on the preset encoding logic.

Further, the IC card C has a memory (not shown) in which device information (authentication data) 51 and key information 52 is stored. In the IC card C, an encoding module 53 is provided. Further, the IC card C has a memory (not shown) in which data (mutual authentication result data) 54 containing information associated with a device of the other party which has performed mutual authentication is stored.

The device information 51 is information associated with the IC card C indicating the basic specification, manufacturing maker, model name and the like of the IC card C. Further, the device information 51 is also used as authentication data used to perform mutual authentication for the main body of the mobile telephone 11, IC chip 32 or device D. The device information 51 is also used as authentication data to perform network authentication for the authentication server 24.

The key information 52 is information to perform various functions (modules) provided on the mobile telephone 11 or the main body of the mobile telephone 11 or perform mutual authentication for the device D connected to the mobile terminal 11. Further, the key information is used as key information to permit the authentication server 24 of the communication company system 20 to perform a network authentication process.

The encoding module 53 performs an encoding process or decoding process according to an algorithm based on the preset encoding logic.

Further, the device D is one example of an external device which has a mutual authentication function with the IC card and is connected to the interface section 34 of the mobile telephone 11. The device D has a memory (not shown) in which device information 55 and key information 56 used as authentication information to perform mutual authentication for the IC card C are stored. Further, in the device D, an encoding module 57 used to perform mutual authentication for the IC card C is provided.

The device information 55 is information associated with the device D. For example, the device information 55 is information such as the basic specification, manufacturing maker, model name and the like of the device D. The device information 55 is also used as authentication data to perform mutual authentication for the IC card C. The key information 56 is key information to perform an authentication process for the IC card C. The encoding module 57 performs an encoding process or decoding process according to an algorithm based on the preset encoding logic.

Next, one example of the configuration of the IC card C is explained in detail.

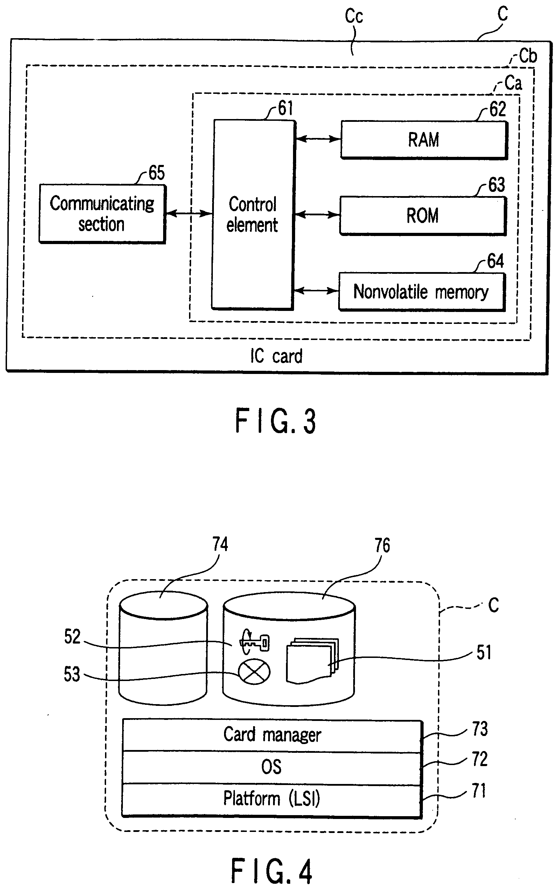

FIG. 3 schematically shows an example of the hardware configuration of an IC card mounted on terminal equipment such as the mobile telephone 11.

As shown in FIG. 3, the IC card C includes a control element 61, random access memory (RAM) 62, read only memory (ROM) 63, nonvolatile memory 64 and communicating section 65.

The control element 61, RAM 62, ROM 63 and nonvolatile memory 64 are configured by an IC chip (LSI) Ca or the like. Further, the IC chip Ca and communicating section 65 are integrally formed as a module Cb. The module Cb is buried in a casing Cc which configures the IC card C. That is, the IC card C is configured by the casing Cc in which the module Cb containing the control element 61, RAM 62, ROM 63, nonvolatile memory 64 and communicating section 65 is buried.

The control element 61 controls the whole portion of the IC card C. The control element 61 is operated according to a program stored in the ROM 63 or nonvolatile memory 64 to perform various functions. The RAM 62 is a volatile memory functioning as a working memory. The ROM 63 is a nonvolatile memory in which control programs and control data are previously stored.

The nonvolatile memory 64 is a rewritable nonvolatile memory which stores various data items and applications (application programs). In the nonvolatile memory 64, authentication data such as authentication programs or key information is stored.

The communicating section 65 performs data communication with a terminal equipment such as the mobile telephone 11. The communicating section 65 also functions as means for receiving electric power used to operate the IC card C. That is, the IC card C is activated (set into an operable state) by an operation clock and operation power supply voltage supplied from the terminal equipment such as the mobile telephone 11 via the communicating section 65.

FIG. 4 is a diagram showing the functional configuration of the IC card C.

As shown in FIG. 4, the IC card C includes a platform (LSI) 71, operating system (OS) 72, card manager 73, card application database 74, authentication database 76 and the like.

The platform 71 controls the basic functions of the IC card C. For example, the platform 71 is configured by the control element 61. Further, it can be considered that the platform 71 is configured by the module Cb having the control element 61, RAM 62, ROM 63, nonvolatile memory 64 and communicating section 65.

The operating system 72 is a system used as a basis which causes the platform 71 to execute various application programs (applications). The card manager 73 manages each application. In the card application database 74, data such as applications based on the specification of the IC card C to be mounted on the mobile telephone 11 is stored. The operating system 72 and card manager 73 are functions realized by causing the control element 61 used as the platform 71 to execute programs stored in the ROM 63 or nonvolatile memory 64.

In the authentication database 76 , data such as application programs (authentication programs) and application data used to perform mutual authentication for the main body of the mobile telephone 11, the IC chip 32 in the mobile telephone 11 or the device D connected to the main body of the mobile telephone 11 is stored. Further, in the authentication database 76, data such as application programs and application data used to perform network authentication for the authentication server 24 of the communication company system 20 is also stored. Data such as application programs in the authentication database 76 is downloaded from the communication company system 20, for example.

Further, in the authentication database 76, authentication data (device information) 51, authentication key information 52, authentication encoding module 53 and the like are stored. Also, in the authentication database 76 , a control program (authentication application) used to control the authentication process is also stored. The encoding module 53 can utilize an encoding module of a lower layer via an application program interface (API). Each communication company may be permitted to independently determine the format of the authentication data 51.

Further, in the authentication application, device certificate information of the IC card C can be formed in the database 76 by use of the authentication data 51 and key information 52. As the key information 52, a plurality of key information items which are formed in conformity with the third parties each time the third parties to be authenticated are changed can be prepared or it can be realized by using single key information.

Further, the key information 52 can be periodically updated by use of the OTA server 22 of the communication company system 20. Thus, falsification of the key information of the IC card C can be prevented and the degree of security can be enhanced. Further, as the authentication application, a user's authentication function by use of personal authentication information such as encoding number information can be additionally provided as an option function. By adding the function of the user by use of the personal authentication information, authentication of the user can be performed, authentication of the user and communication company can be realized and the degree of security can be enhanced.

Next, the operations of the mobile telephone 11 and IC card C in the communication system with the above configuration are explained.

In the present embodiment, first and second operation examples are explained. The first operation example is an operation example in which the IC card C and the mobile telephone 11 as the terminal equipment perform mutual authentication. The second operation example is an operation example in which mutual authentication of the IC card C and the function (for example, IC chip 32) in the mobile telephone 11 which requires authentication or mutual authentication of the IC card C and an equipment (for example, device D) which is connected to the mobile telephone 11 and requires authentication is performed in addition to mutual authentication of the IC card C and the IC card C and the mobile telephone 11 as the terminal equipment.

First, the first operation example is explained.

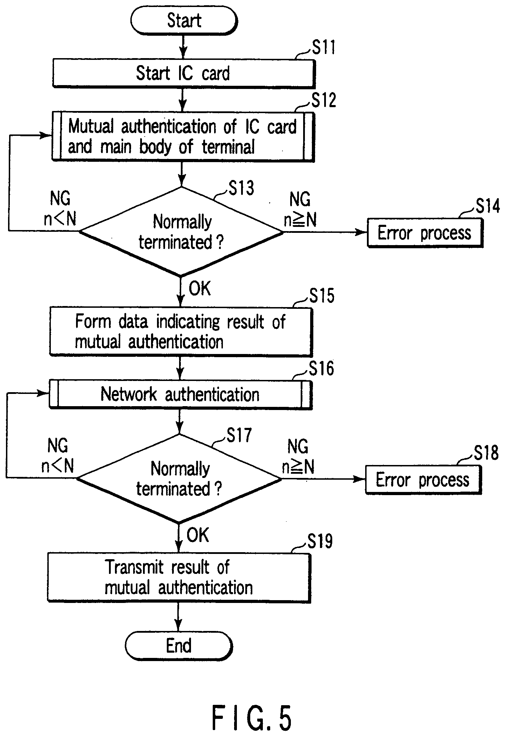

FIG. 5 is a flowchart for illustrating the first operation example.

First, when the IC card C is mounted on the mobile telephone 11 or the power supply of the mobile telephone 11 is turned on, the IC card C performs the starting process (step S11). When the IC card C mounted on the mobile telephone 11 is started, the IC card C and the main body of the mobile telephone 11 on which the IC card C is mounted perform the mutual authentication process (step S12).

The mutual authentication process of the main body of the mobile telephone 11 and the IC card C is a process in which the main body of the mobile telephone 11 and the IC card C perform mutual authentication based on key information items and encoding algorithms thereof. Therefore, in the mutual authentication process of the main body of the mobile telephone 11 and the IC card C, a process of causing the main body of the mobile telephone 11 to authenticate the IC card C and a process of causing the IC card C to authenticate the main body of the mobile telephone 11 are performed.

That is, in the main body of the mobile telephone 11, the controller 35 performs the authentication process of authenticating the IC card C based on authentication information received from the IC card C mounted thereon by use of the key information 42 and encoding module 43. Further, in the IC card C, the authentication process of authenticating the main body of the mobile telephone 11 is performed based on authentication information received from the main body of the mobile telephone 11 by use of the key information 52 and encoding module 53 according to the authentication application.

If mutual authentication of the main body of the mobile telephone 11 and IC card C by the above mutual authentication process fails (NG in step S13), whether or not the number N of times of the mutual authentication process performed exceeds a preset retry number n is determined in the IC card C. If it is determined in the above determining process that the number N of times of the mutual authentication process performed is not equal to or larger than the preset retry number n (NG in step S13: n<N), the IC card and the main body of the mobile telephone 11 on which the IC card C is mounted retry the mutual authentication process of step S12.

Further, if it is determined in the above determination process that the number N of times of the mutual authentication process performed becomes equal to or larger than the preset retry number n (NG in step S13: n≥N), the IC card forms error information on the assumption that mutual authentication for the main body of the mobile telephone 11 completely fails (step S14). For example, the error information may be displayed as an error message on a display section (not shown) of the main body of the mobile telephone 11. Further, the error information may be stored in a memory (not shown) of the IC card C.

If mutual authentication of the main body of the mobile telephone 11 and IC card C by the above mutual authentication process is successfully performed (OK in step S13), the IC card C forms data 54 indicating the result of mutual authentication for the main body of the mobile telephone 11 by use of the authentication application (step S15). The data 54 is formed based on the result of mutual authentication process, the device information 51 of the main body of the mobile telephone 11 and the like.

That is, if mutual authentication for the IC card C is successfully performed, the controller 35 of the main body of the mobile telephone 11 transmits specified data configured by the device information 41 and the like to the authentication application of the IC card C. As a result, in the authentication application of the IC card C, data 54 configured by time required for performing the mutual authentication process, the maker of the mobile telephone terminal, model name and the like is formed in addition to information indicating that mutual authentication for the IC card C and the main body of the mobile telephone 11 has been performed.

If the data 54 is formed after the mutual authentication is successfully performed, the IC card C performs a network authentication process (external system authentication process) for the communication company system 20 via the main body of the mobile telephone 11 (step S16). The network authentication process is an authentication process which is performed by the communication company system 20 to authenticate the IC card C or the main body of the mobile telephone 11 having the IC card C inserted therein (a combination of the main body of the mobile telephone 11 and IC card C). For example, in the system configuration shown in FIG. 1, the authentication server 24 in the communication company system 20 authenticates the IC card C based on network authentication data from the IC card C. The result of the network authentication process is transmitted from the communication company system 20 to the IC card C.

When the authentication server 24 successfully authenticates the IC card C by the network authentication process (OK in step S17), the IC card C transmits data 54 obtained as the result of mutual authentication for the IC card C and the main body of the mobile telephone 11 having the IC card C mounted thereon to the authentication server 24 of the communication company system 20 (step S19).

That is, the IC card C authenticated by the communication company system 20 transmits data 54 containing device information 41 of the main body of the mobile telephone 11 and device information 51 of the IC card C to the communication company system 20. The communication company system 20 which has received the data 54 acquires device information of the authenticated IC card C and the device information 41 of the main body of the mobile telephone 11 having the IC card C mounted thereon. As a result, in the communication company system 20, the type of terminal equipment on which the authenticated IC card C is mounted can be recognized.

If the network authentication process in step S16 fails and when the number N of times of the network authentication process performed is smaller than the preset retry number n (NG in step S17: n<N), the IC card C retries the network authentication process in the step S16. If the number N of network authentication processes performed becomes equal to or larger than the preset retry number n (NG in step S17: n≥N), the IC card C performs a network authentication error process (step S18). As the network authentication error process, for example, error information indicating that the network authentication process has failed is formed. For example, the error information may be displayed as an error message on a display section (not shown) of the main body of the mobile telephone 11 or stored in a memory (not shown).

Next, the mutual authentication process for the main body of the mobile telephone 11 and IC card C is explained in detail.

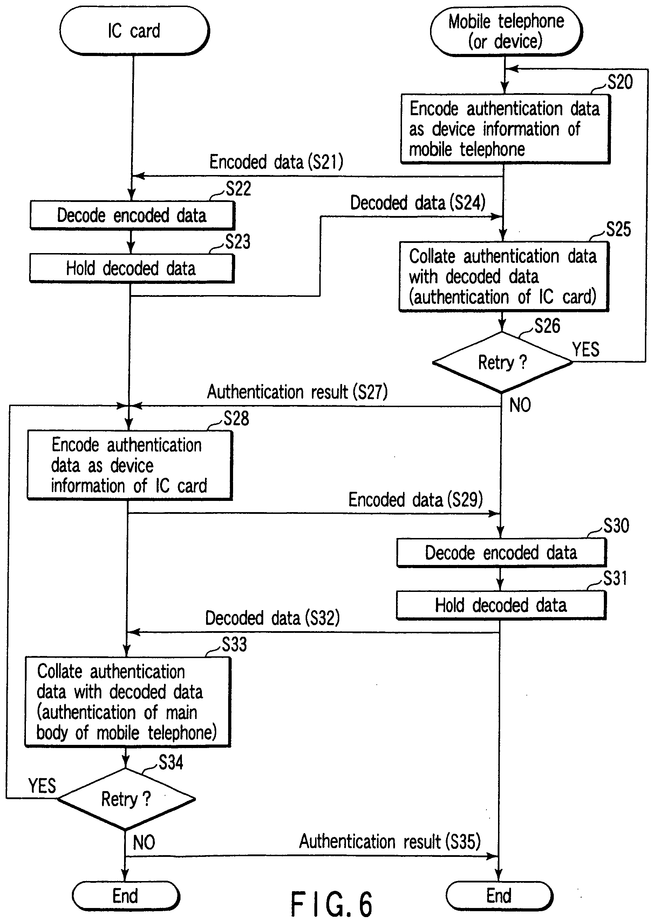

FIG. 6 is a flowchart for illustrating the mutual authentication process for the main body of the mobile telephone 11 and the IC card C.

First, a process of causing the main body of the mobile telephone 11 to authenticate the IC card C (an authentication process for the IC card C by the main body of the mobile telephone 11) is performed (steps S20 to S27).

In the authentication process for the IC card C by the mobile telephone 11, first, the controller 35 of the mobile telephone 11 encodes authentication data 41 as device information of the main body of the mobile telephone 11 by use of key information 42 by the encoding module 43 (step S20). When the authentication data 41 is encoded, the controller 35 of the mobile telephone 11 transmits the encoded authentication data (encoded data) to the IC card C (step S21).

The IC card C which has received the encoded data decodes the received encoded data by use of the key information 52 stored in the memory 64 by the encoding module 53 (step S22). When the encoded data received from the mobile telephone 11 is decoded, the IC card C holds the decoded data as device information of the main body of the mobile telephone 11 in a memory such as the RAM 12 (step S23). Further, the IC card C transmits the decoded data to the main body of the mobile telephone 11 (step S24).

In this case, the authentication data 41 is device information of the main body of the mobile telephone 11. Further, the encoding data is obtained by encoding the authentication data 41 by use of the key information 42 by the encoding module 43. Therefore, if the algorithm of the key information 52 and encoding module 53 is the same as the algorithm of the key information 42 and encoding module 43 (that is, if authentication is successfully performed), the decoded data is used as device information of the main body of the mobile telephone 11. For this purpose, the IC card C holds the decoded data in a memory such as the RAM 12 as device information of the main body of the mobile telephone 11.

In the mobile telephone 11 which has received the decoded data from the IC card C, it authenticates the IC card C based on the received decoded data (step S25). That is, the controller 35 of the mobile telephone 11 determines whether authentication of the IC card C can be successfully performed or not according to whether the decoded data received from the IC card C coincides with the authentication data or not.

For example, if the authentication data 41 encoded by use of the key information 42 by the encoding module 43 coincides with the decoded data decoded by use of the key information 52 by the encoding module 53, it means that the encoding algorithm of the key information 42 and encoding module 43 of the mobile telephone 11 coincides with the encoding algorithm of the key information 52 and encoding module 53 of the IC card C. In this case, the controller 35 of the mobile telephone 11 determines that the IC card C is valid (determines that authentication of the IC card is successfully performed).

If the authentication data 41 encoded by use of the key information 42 by the encoding module 43 does not coincide with the decoded data decoded by use of the key information 52 by the encoding module 53, it means that the encoding algorithm of the key information 42 and encoding module 43 of the mobile telephone 11 does not coincide with the encoding algorithm of the key information 52 and encoding module 53 of the IC card C. In this case, the controller 35 of the mobile telephone 11 determines that the IC card C is not valid (determines that authentication of the IC card fails).

When authentication of the IC card C by the main body of the mobile telephone 11 fails, the controller 35 of the mobile telephone 11 counts up an error counter (not shown) which indicates the number of errors. If the error counter is counted up, the controller 35 determines whether or not the count (N) of the error counter becomes equal to or larger than the preset retry number (n). If the number of errors is smaller than the preset retry number, that is, it is determined that it is necessary to retry the authentication process of the IC card C ("YES" in step S26), the controller 35 performs the authentication process of the IC card C of steps S20 to S26 again.

If it is determined that the number of errors becomes equal to or larger than the preset retry number ("NO" in step S26), the controller 35 notifies the authentication result indicating authentication failure to the IC card C. At this time, the IC card C proceeds the process to step S13 and performs the error message forming process of step S14.

When authentication of the IC card C by the main body of the mobile telephone 11 is successfully performed, the controller 35 of the mobile telephone 11 supplies a notification of success of authentication as the result of authentication of the IC card C by the main body of the mobile telephone 11 (step S27). The IC card C which has received the notification performs a process of authenticating the main body of the mobile telephone 11 (an authentication process of the main body of the mobile telephone 11 by the IC card C) (steps S28 to S35).

In the authentication process of the main body of the mobile telephone 11 by the IC card C, first, the control element 61 of the IC card C encodes the authentication data 51 as the device information of the IC card C by use of the key information 52 by the encoding module 53 (step S28). When the authentication data 51 is encoded, the control element 61 of the IC card C transmits the encoded authentication data (encoded data) to the main body of the mobile telephone 11 (step S29). The main body of the mobile telephone 11 which has received the encoded data decodes the received encoded data by use of the key information 42 by the encoding module 43 (step S30). When the main body of the mobile telephone 11 decodes the encoded data received from the IC card C, it holds the decoded data as the device information of the main body of the mobile telephone 11 in the memory section 36 of the control unit 30 (step S31). The controller 35 of the main body of the mobile telephone 11 transmits the decoded data to the IC card C (step S32).

In this case, the authentication data 51 is device information of the IC card C. Further, the encoded data is obtained by encoding the authentication data 51 by use of the key information 52 by the encoding module 53. Therefore, the decoded data is used as device information of the main body of the mobile telephone 11 if the algorithm of the key information 42 and encoding module 43 is the same as the algorithm of the key information 52 and encoding module 53 (that is, authentication of the main body of the mobile telephone 11 is successfully performed). For this purpose, the main body of the mobile telephone 11 holds the decoded data as deice information of the IC card C in the memory section 36.

The IC card C which has received the decoded data from the main body of the mobile telephone 11 authenticates the main body of the mobile telephone 11 based on the received decoded data (step S33). That is, the control element 61 of the IC card C determines whether authentication is successfully performed or not according to whether or not the decoded data received from the main body of the mobile telephone 11 coincides with the authentication data 51.

For example, if the authentication data 51 encoded by use of the key information 52 by the encoding module 53 coincides with the decoded data decoded by use of the key information 42 by the encoding module 43, it means that the encoding algorithm of the key information 52 and encoding module 53 of the IC card C coincides with the encoding algorithm of the key information 42 and encoding module 43 of the mobile telephone 11. In this case, the control element 61 of the IC card C determines that the main body of the mobile telephone 11 is valid (it determines that authentication of the main body of the mobile telephone 11 is successfully performed).

Further, if the authentication data 51 encoded by use of the key information 52 by the encoding module 53 does not coincide with the decoded data decoded by use of the key information 42 by the encoding module 43, it means that the encoding algorithm of the key information 52 and encoding module 53 of the IC card C does not coincide with the encoding algorithm of the key information 42 and encoding module 43 of the main body of the mobile telephone 11. In this case, the control element 61 of the IC card C determines that the main body of the mobile telephone 11 is not valid (it determines that authentication of the main body of the mobile telephone 11 fails).

When authentication of the main body of the mobile telephone 11 by the IC card C fails, the control element 61 of the IC card C counts up the error counter (not shown) which indicates the number of errors. If the error counter is counted up, the control element 61 determines whether or not the count (N) of the error counter becomes equal to or larger than the preset retry number (n). If the number of errors is smaller than the preset retry number, that is, if it is determined that it is necessary to retry the authentication process of the main body of the mobile telephone 11 ("YES" in step S34), the controller 35 performs the authentication process of the main body of the mobile telephone 11 of steps S28 to S34 again.

When authentication of the main body of the mobile telephone 11 by the IC card C is successfully performed, the control element 61 of the IC card C supplies a notification of success of authentication as the authentication result of the main body of the mobile telephone 11 by the IC card C (step S35).

The mutual authentication process of the main body of the mobile telephone 11 and IC card C is not limited to the process of steps S20 to S35. The mutual authentication process of the main body of the mobile telephone 11 and IC card C may be a process of mutually authenticating the main body of the mobile telephone 11 and IC card C and causing the IC card C to acquire device information items of the main body of the mobile telephone 11 as the results of the mutual authentication processes.

According to the first operation example, the IC card mounted on the terminal equipment performs mutual authentication for the main body of the terminal equipment and the network authentication process for the IC card is performed by the communication company system based on the result of the mutual authentication and authentication information of the IC card.

Therefore, it is not necessary for the communication company system 20 to individually authenticate the IC card and the main body of the terminal equipment. As a result, in order to permit the communication company system 20 to individually authenticate the IC card and the main body of the mobile telephone while security of the terminal equipment on which the IC card is mounted, that is, security of the utilization environment of the IC card is maintained, it is not necessary to increase the communication track and take a long processing time for the authentication process for the IC card and the main body of the terminal equipment.

Further, according to the first operation example, when the IC card is authenticated by the communication company system, it transmits information associated with the terminal equipment which is mutually authenticated to the communication company system. Thus, the communication company system can easily acquire information associated with the main body of the terminal equipment on which the IC card is mounted as well as information associated with the IC card.

That is, according to the first operation example, it is not necessary for the communication company system 20 to individually acquire information associated with the main body of the mobile telephone from the main body of the mobile telephone. Therefore, in order to cause the communication company system 20 to individually acquire information from the main body of the mobile telephone, it is not necessary to increase the communication traffic. As a result, the present communication system can perform the efficient data communication while maintaining the security of the utilization environment of the IC card.

Further, when the communication company system manages information associated with the IC card of each user, the communication company can get information on the utilization state (utilization state determined based on information associated with the equipment having the IC card mounted thereon) of the communication system of the user (a possessor of the IC card C) based on information associated with the equipment having the IC card mounted thereon and acquired from the IC card which is successfully authenticated. For example, when the communication company provides various services for one user, the communication company system can easily get information on the services utilized by the user.

Further, even if the user having the IC card uses various terminal equipments, the communication company system can adequately get information associated with the terminal equipment which the user utilizes. That is, the communication company can provide an environment in which the user having the IC card can efficiently utilize the communication company system by use of various terminal equipments for the user. As a result, the communication company can provide fine and precise services for the user.

As described above, the mobile telephone 11 is one example of the terminal equipment. That is, the first operation example can be applied to a terminal equipment such as the personal computer 12, PDA 13, electronic game machine 14 which can communicate with the communication company system 20 with the IC card C mounted thereon.

Next, the second operation example is explained.

First, an operation performed when the IC card C mounted on the main body of the mobile telephone 11 is started is explained as the second operation example.

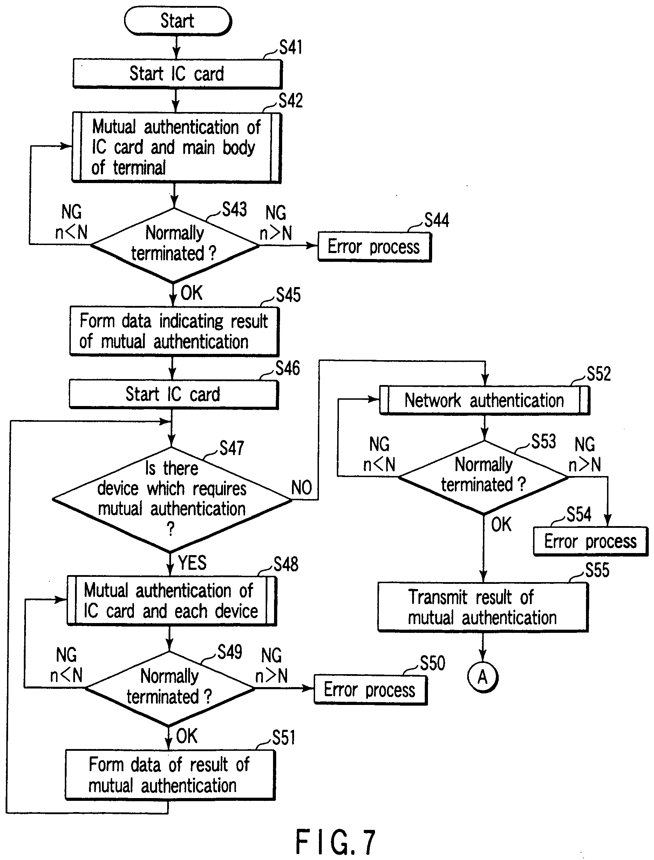

FIG. 7 is a flowchart for illustrating an operation performed when the IC card C mounted on the main body of the mobile telephone 11 is started as the second operation example. The process of steps S41 to S45 shown in FIG. 7 is the same as the process of steps S11 to S15 shown in FIG. 5. Further, the process of steps S52 to S55 shown in FIG. 7 is the same as the process of steps S16 to S19 shown in FIG. 5.

That is, when the IC card C mounted on the mobile telephone 11 used as the terminal equipment is started (step S41), the IC card C and the main body of the mobile telephone 11 on which the IC card C is mounted perform the mutual authentication process (step S42). As described above, the mutual authentication process of the main body of the mobile telephone 11 and the IC card C is a process of causing the main body of the mobile telephone 11 and the IC card C to perform mutual authentication based on key information and encoding algorithm thereof. For example, the mutual authentication process of the main body of the mobile telephone 11 and the IC card C is performed according to the procedure shown in FIG. 6.

If it is determined that the number N (the number N of times by which the mutual authentication process fails) of mutual authentication processes performed for the main body of the mobile telephone 11 and IC card C by the mutual authentication process is not equal to or larger than a preset limited number n (NG in step S43: n<N), the IC card C retries the mutual authentication process of step S42.

Further, if it is determined in the above determination process that the number N (the number N of times by which the mutual authentication process fails) becomes equal to or larger than the preset number n (NG in step S43: n≥N), the IC card C performs an error process on the assumption that the mutual authentication of the main body of the mobile telephone 11 completely fails (step S44). For example, like step S14, in the error process, a process of forming error information is performed.

If mutual authentication of the main body of the mobile telephone 11 and IC card C by the mutual authentication process is successfully performed (OK in step S43), the IC card C forms data indicating the result of mutual authentication for the main body of the mobile telephone 11 based on the authentication application (step S45). The data indicating the result of mutual authentication for the main body of the mobile telephone 11 is formed based on the result of the mutual authentication process, the device information 51 of the main body of the mobile telephone 11 and the like. For example, the data indicating the result of mutual authentication for the main body of the mobile telephone 11 contains time in which the mutual authentication process for the main body of the mobile telephone 11 is performed, information associated with the main body of the mobile telephone 11 (for example, the specification, maker, model name of the main body of the mobile telephone 11) and the like.

The data indicating the result of mutual authentication for the main body of the mobile telephone 11 is held in the IC card C as data 54 to be transmitted to the communication company system 20.

If the mutual authentication process for the main body of the mobile telephone 11 is successfully performed, the control element 61 of the IC card C performs a searching process of searching for a device (parts of the main body of the mobile telephone 11) other than the main body of the mobile telephone 11 which is required to perform mutual authentication for the IC card C (steps S46 and S47).

In this case, the device (parts of the main body of the mobile telephone 11) other than the main body of the mobile telephone 11 is a device such as an external device connected to the main body of the mobile telephone 11 or a function (module) which the main body of the mobile telephone 11 has. That is, in the searching process, a device which is required to perform mutual authentication for the IC card C is extracted from the devices such as external devices connected to the main body of the mobile telephone 11 and functions which the main body of the mobile telephone 11 has.

For example, in the configuration example of FIG. 2, the IC chip 32 provided in the main body of the mobile telephone 11, the device D connected to the main body of the mobile telephone 11 and the like are the devices (parts of the main body of the mobile telephone 11) other than the main body of the mobile telephone 11. In this case, the IC card C which has successfully performed the mutual authentication for the main body of the mobile telephone 11 recognizes that the IC chip 32 and device D are devices which are required to perform mutual authentication for the IC card C by the searching process.

The modules which the main body of the mobile telephone 11 has and the external devices connected to the main body of the mobile telephone 11 are recognized by the device management function of the main body of the mobile telephone 11. The device management function is realized by device drivers corresponding to the modules which the main body of the mobile telephone 11 has or the external devices connected to the main body of the mobile telephone 11. That is, the device management function is a function realized by permitting the controller 35 to execute programs of the device drivers corresponding to respective devices. For example, information indicating each device recognized by the device management function is stored as part of system information indicating the present system configuration of the mobile telephone 11 in the memory section 36 of the main body of the mobile telephone 11.

In the searching process, the control element 61 of the IC card C acquires system information containing information indicating each device recognized by the device management function from the main body of the mobile telephone 11. The control element 61 of the IC card C recognizes information indicating each device recognized by the device management function based on the system information acquired from the main body of the mobile telephone 11 and extracts a device which is required to perform the mutual authentication process for the IC card C.

The searching process in the step S46 may be performed by the main body of the mobile telephone 11 and the searching result can be transmitted to the IC card. In this case, the controller 35 of the main body of the mobile telephone 11 which successfully performs the mutual authentication process for the IC card C searches for a device which is required to perform mutual authentication for the IC card C from the devices recognized by the device management function. The controller 35 of the main body of the mobile telephone 11 transmits information indicating the device which is required to perform mutual authentication for the IC card C searched in the searching process to the IC card C.

When it is determined that there is provided a device which is required to perform the mutual authentication process by the searching process ("YES" in step S47), the control element 61 of the IC card C performs the mutual authentication process for each device which is determined necessary to perform the mutual authentication process (step S48).

For example, as shown in FIG. 2, if the IC chip 32 is mounted on the main body of the mobile telephone 11 and the device D is mounted, the IC chip 32 and device D are recognized as devices which are required to perform mutual authentication for the IC card C. In this case, the IC card C performs the mutual authentication process for the IC chip 32 and the mutual authentication process for the device D.

Further, the mutual authentication process of the IC card C and each device contains a process of causing each function or each device to authenticate the IC card C and a process of causing the IC card C to authenticate each function or each device. For example, the procedure of the mutual authentication process for the IC card and each function or each device can be realized in the same manner as the procedure of the mutual authentication process for the IC card and the main body of the mobile telephone 11 as shown in FIG. 6. For example, the mutual authentication process for the IC card and each device can be realized by a process of determining whether or not the key information and encoding algorithm of the IC card coincide with the key information and encoding algorithm of each device.

If it is determined that the number N (the number N of times by which the mutual authentication process fails) of mutual authentication processes performed for the IC card C and the device does is not equal to or larger than a preset limited number n (NG in step S49: n<N), the IC card C retries the mutual authentication process for the device of the step S48.

Further, if it is determined in the above determination process that the number N (the number N of times by which the mutual authentication process fails) becomes equal to or larger than the preset number n (NG in step S49: n≥N), the IC card C performs an error process on the assumption that the mutual authentication for the device completely fails (step S50). For example, in the error process, a process of forming error information indicating the function or device in which the mutual authentication process has failed is performed. The error information may be displayed as an error message on a display section (not shown) of the main body of the mobile telephone 11 or stored in a memory (not shown).

If mutual authentication for the device used as parts of the main body of the mobile telephone 11 fails, the IC card C may be set into a state in which the IC card C is inoperable or the IC card C may be operated while the device which fails in mutual authentication is set unusable.

Further, when mutual authentication for the device by the mutual authentication process is successfully performed (OK in step S49), the IC card C forms data indicating the result of mutual authentication for the device which successfully performs mutual authentication by use of the authentication application (step S51). The data indicating the result of mutual authentication is formed based on the result of the mutual authentication process and device information of the device. The data indicating the result of mutual authentication for the device is held in the IC card C as data 54 to be transmitted to the communication company system 20.

For example, when mutual authentication for the IC card C and IC chip 32 is successfully performed, the IC card C forms data containing the device information 45 of the IC chip 32 as data indicating the result of mutual authentication for the IC chip 32. In this case, the data indicating the result of mutual authentication for the IC chip 32 contains, for example, time in which the IC card C and IC chip 32 perform the mutual authentication process, device information of the IC chip 32 (for example, the specification, maker and model name of the device) and the like.

When mutual authentication for the IC card C and device D is successfully performed, the IC card C forms data containing the device information 55 of the device D as data indicating the result of mutual authentication for the device D. In this case, the data indicating the result of mutual authentication for the device D contains, for example, time in which the IC card C and device D perform the mutual authentication process, device information of the device D (for example, the specification, maker and model name of the device) and the like.

In the operation example shown in FIG. 7, data formed in step S45 and indicating the result of mutual authentication for the main body of the mobile telephone 11 is held in the IC card C as data 54 to be transmitted to the communication company system 20. Therefore, each data formed in step S51 and indicating the result of mutual authentication for each device is held in the IC card C together with data indicating the result of mutual authentication for the main body of the mobile telephone 11 as data 54 to be transmitted to the communication company system 20. That is, in the data 54 to be transmitted to the communication company system 20, information associated with each device which has successfully performed mutual authentication for the IC card C is contained in addition to information associated with the main body of the mobile telephone which has successfully performed mutual authentication for the IC card C.

The process of steps S47 to S51 is performed for all of the devices that are required to perform mutual authentication for the IC card C. Therefore, when the process of steps S47 to S51 is ended, information associated with each device and the main body of the mobile telephone 11 which have successfully performed mutual authentication for the IC card C is contained in the data 54.

When the mutual authentication process for the IC card C and all of the devices is completed ("NO" in step S47), the IC card C performs a network authentication process for the communication company system 20 via the main body of the mobile telephone 11 (step S52). Like the process of the step S16, the network authentication process is a process of permitting the communication company system 20 to authenticate the IC card C inserted into the main body of the mobile telephone 11.

If authentication for the IC card C and authentication server 24 is successfully performed by the network authentication process (OK in step S53), the IC card C transmits the data 54 to the authentication server 24 of the communication company system 20 (step S55).

Thus, in the communication company system 20, information associates with the main body of the mobile telephone, function and device which have successfully performed mutual authentication for the IC card C can be acquired. In other words, in the communication company system 20, information associated with the main body of a terminal equipment on which the IC card C is mounted, a function of the terminal equipment and an external device connected to the terminal equipment can be acquired.

When network authentication in step S52 fails and if the number N of times of the network authentication process performed is smaller than the preset retry number n (NG in step S53: n<N), the IC card retries the network authentication process of step S52. Further, if the number N of times of the mutual authentication process performed becomes equal to or larger than the preset retry number n (NG in step S53: n≥N), the IC card performs a network authentication error process (step S54). In the network authentication error process, for example, error information indicating that the network authentication fails is formed. For example, the error information may be displayed as an error message on a display section (not shown) of the main body of the mobile telephone 11 or stored in a memory (not shown).

In the communication company system 20, information associated with the main body of the terminal equipment (main body of the mobile telephone) on which the IC card is mounted, information associated with each function (contained module) installed in the terminal equipment (mobile telephone) and information associated with each external device connected to the terminal equipment (mobile telephone) can be acquired from the IC card which has performed the network authentication in the process of steps S41 to S55.

Next, as the second operation example, the operation performed when the system configuration of the main body of the mobile telephone 11 is modified while the main body of the mobile telephone 11 and IC card are being operated is explained.

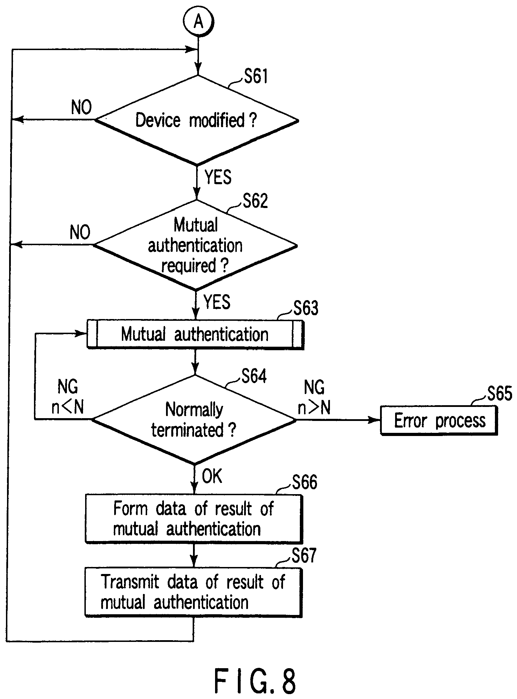

FIG. 8 is a flowchart for illustrating an operation example when the system configuration of the main body of the mobile telephone 11 is modified while the main body of the mobile telephone 11 and IC card are being operated as the second operation example. The process of steps S63 to S65 shown in FIG. 8 is the same as the process of steps S48 to S51 shown in FIG. 7.

In a terminal equipment such as the mobile telephone 11, the system configuration thereof may be modified during the operation in some cases. For example, in the configuration example of FIG. 2, the device D may be connected to (inserted into) the interface section 34 in some cases after the power supply of the main body of the mobile telephone 11 is activated (during the operation). The device D connected to the interface section 34 is recognized based on the device management function by the main body of the mobile telephone 11.

In such a case, in the second operation example, if the device D is required to perform the mutual authentication process for the IC card C, the IC card C performs the mutual authentication process for the device D and transmits data indicating the result of the mutual authentication process for the device D to the communication company system 20. That is, in the second operation example, when a device is added to the terminal equipment which is now operated, the IC card C performs mutual authentication for the device and transmits data containing information associated with the device to the communication company system 20.

Next, a case wherein it is assumed that a device D is inserted into the main body of the mobile telephone 11 which is being operated is explained. That is, when the device D is connected to (inserted into) the mobile telephone 11, the controller 35 of the mobile telephone 11 recognizes that the device D is connected based on the device management function. Information indicating that connection of the device D is recognized is supplied from the controller 35 of the mobile telephone 11 to the IC card C mounted on the mobile telephone 11.

When receiving the above information, the control element 61 of the IC card C recognizes that the device D is connected to the main body of the mobile telephone 11 (step S61). When connection of the device D to the main body of the mobile telephone 11 is recognized ("YES" in step S61), the IC card C determines whether or not the device D is a device which is required to perform mutual authentication for the IC card C (step S62).

When connection of the device D is recognized, it is permitted for the controller 35 of the mobile telephone 11 to determine whether or not the device D is required to perform mutual authentication for the IC card C. That is, when it is determined that the recognized device D is a device which is required to perform mutual authentication for the IC card C, the controller 35 of the mobile telephone 11 may inform the IC card C that the device D is connected.

When it is determined that the device D connected to the mobile telephone 11 is required to perform mutual authentication ("YES" in step S62), the control element 61 of the IC card C performs mutual authentication for the device D by the same process as the process of steps S48 to S51 (steps S63 to S66).

If mutual authentication for the IC card C and device D is successfully performed ("YES" in step S64), the IC card C forms data 54 containing device information 55 of the device D as data indicating the result of mutual authentication for the device D (step S66). In this case, in the data 54 indicating the result of mutual authentication for the device D, for example, time in which the IC card C and device D perform the mutual authentication process, device information of the device D (for example, the specification, maker, model name of the device) and the like are contained.

When the data 54 indicating the result of mutual authentication for the device D is formed, the IC card C transmits the data 54 to the authentication server 24 of the communication company system 20 via the main body of the mobile telephone 11 (step S67).

Thus, information associated with the device D which is added to the mobile telephone 11 during the operation of the IC card C is transmitted to the authentication server 24 of the communication company system 20 when the device D is connected to the mobile telephone 11. As a result, in the authentication server 24 of the communication company system 20, information associated with the device D which is added to the mobile telephone 11 during the operation of the IC card C is added to information acquired at the starting time of the IC card C (information associated with each device and information associated with the main body of the mobile telephone 11 subjected to mutual authentication at the starting time) and thus registered.

When the system configuration of the mobile telephone 11 is modified during the operation of the mobile telephone 11 and IC card C (when a device is added), the IC card C can securely perform mutual authentication for the device added to the mobile telephone 11 and supply information associated with the device to the communication company system 20 by performing the process of steps S61 to S67.

As described above, according to the second operation example, the IC card C performs mutual authentication for each device (a module contained in the terminal equipment and an external device connected to the terminal equipment) which is required to perform mutual authentication not only for the terminal equipment but also for the IC card C. Then, network authentication of the IC card C is performed by the communication company system based on the results of the above mutual authentication processes and authentication information of the IC card.

Thus, it is not necessary for the communication company system 20 to individually authenticate the main body of the terminal equipment and each device added to the terminal equipment (a module contained in the terminal equipment and an external device connected to the terminal equipment). As a result, in order for the communication company system 20 to individually authenticate the main body of the terminal equipment and each device while maintaining the security of the main body of the terminal equipment and each device, it is not necessary to increase the communication traffic and take a long processing time for the authentication process of the main body of the terminal equipment and each device.

Further, according to the second operation example, in the communication company system 20, not only information associated with the main body of the terminal equipment on which the IC card C is mounted but also information associated with each device (a module contained in the terminal equipment and an external device connected to the terminal equipment) which has successfully performed mutual authentication for the IC card C can be easily acquired.

That is, according to the second operation example, in the communication company system 20, it is not necessary to individually acquire information associated with the main body of the mobile telephone and each device mounted on the mobile telephone from the respective devices. Therefore, in order for the communication company system 20 to individually acquire information from the main body of the mobile telephone or each device, it is not necessary to increase the communication traffic and take a long processing time for the authentication process of the main body of the terminal equipment or each device. As a result, the present communication system can realize efficient data communication and realize efficient data communication while maintaining the high-degree security.

Further, in the communication company system, the utilization state (utilization state determined based on information associated with the terminal equipment and device on which the IC card is mounted) of the communication system of the user (the possessor of the IC card C) can be easily acquired based on information acquired from the IC card and associated with the mobile telephone having the IC card mounted thereon and information associated with the device mounted on the mobile telephone. For example, when the communication company provides various services for one user, information on the service utilized by the user can be easily acquired by use of information attained from the IC card in the communication company system.

Further, even when the user having the IC card utilizes various terminal equipments, information associated with the terminal equipment which the user utilizes and information associated with the device mounted on the terminal equipment can be adequately acquired in the communication company system. That is, the user having the IC card authenticated by the communication company system can utilize the communication company system by use of various terminal equipments. Further, even when the user having the IC card uses various terminal equipments, it is possible to provide fine and precise services for the user in the communication company system.

As described above, the mobile telephone is one example of the terminal equipment and the second operation example can be applied to the terminal equipment such as a personal computer, PDA or electronic game machine having the communication function.

## Claims

1. An IC card (C) adapted to be mounted on a main body of a terminal equipment (11, 12, 13, 14) having a function of communication with an external system (20), comprising:
a memory (75) adapted for storing authentication information, **characterized in that** the IC card (c) further comprises
an equipment authenticating section (61) adapted for performing mutual authentication with the terminal equipment (11, 12, 13, 14) based on the authentication information stored in the memory (75), and
an external system authenticating section adapted for performing an authentication processing of the external system (20) with the IC card when the mutual authentication with the terminal equipment has been performed successfully,
a device authenticating section (61) adapted for performing mutual authentication with a device (32, D) with which the terminal equipment is equipped wherein the device (32, D) is a module which the main body of the terminal equipment (11, 12, 13, 14) has and/or an external device connected to the main body of the terminal equipment (11, 12, 13, 14),
a storing section adapted for storing data (54) including information (41, 45, 55) on the terminal equipment and the device (32, D) which have successfully performed mutual authentication for the IC card (C),
a transmitter section adapted for transmitting the data (54) to the external system (20) via the terminal equipment, if the authentication processing of the external system (20) with the IC card has been performed successfully.

2. The IC card (C) according to claim 1, further comprising an encoding module (53) adapted for performing one of an encoding process and decoding process for data by use of key information (52),
wherein the memory (76) is adapted for storing the key information (52) used for one of the encoding process and decoding process by the encoding module (53), and the equipment authenticating section (61) is adapted for mutual authentication for the terminal equipment (11, 12, 13, 14) based on one of data decoded and data encoded by use of the key information (52) stored in the memory (76) by use of the encoding module (53).

3. The IC card (C) according to claim 1 or 2, further comprising a searching section (61) which is adapted for searching for the module (32) to be mutually authenticated for the IC card (C) among modules of the terminal equipment (11, 12, 13, 14) when mutual authentication for the terminal equipment (11, 12, 13, 14) by the equipment authenticating section (61) is successfully performed,
wherein the device authenticating section (61) is adapted for performing mutual authentication for the module (32) searched for by the searching section (61).

4. The IC card (C) according to any one of claims 1 to 3, further comprising a searching section (61) which is adapted for searching for the external device (D) required to be mutually authenticated with respect to the IC card (C) connected to the terminal equipment (11, 12, 13, 14) when mutual authentication for the terminal equipment (11, 12, 13, 14) by the equipment authenticating section (61) is successfully performed,
wherein the device authenticating section (61) is adapted for performing mutual authentication for the external device (D) searched for by the searching section (61).

5. A terminal equipment (11, 12, 13, 14) having a function of communication with an external system (20) comprising:
a main body having an interface (31) on which an IC card (C) is mounted,
a memory section (36) in which authentication information is stored, **characterized by**
an authenticating section (35) adapted for performing a process of mutual authentication with the IC card (C) mounted on the interface (31) based on authentication information stored in the memory (36),
a device (32, D) having a function of mutual authentication with the IC card (C) wherein the device (32, D) is a module which the main body of the terminal equipment (11, 12, 13, 14) has and/or an external device connected to the main body of the terminal equipment (11, 12, 13, 14),
a communication control section (37) adapted for controlling data communication with the IC card (C) and the external system (20) for performing an authentication process for the IC card (C) by the external system (20) based on the result of mutual authentication with the IC card (C) and the terminal equipment (11, 12, 13, 14) and authentication information of the IC card (C), and
for controlling transmission of data from the IC card (C) to the external system (20), the data including information on the terminal equipment (11, 12, 13, 14) and the device (32, D) which have successfully performed mutual authentication for the IC card (C), and the transmission of data being performed when the mutual authentication with the external system (20) has been performed successfully.

6. A communication system comprising:
a terminal equipment (11, 12, 13, 14) according to claim 5, and
an IC card (C) according to any one of claims 1 to 4.

## Patentansprüche

1. IC-Karte (C), die angepasst ist zur Montage an einem Hauptkörper einer Endgeräteinrichtung (11, 12, 13, 14), die eine Funktion zur Kommunikation mit einem externen System (20) aufweist, mit:
einem Speicher (75), der angepasst ist zum Speichern von Authentifizierungsinformation, **dadurch gekennzeichnet, dass** die IC-Karte (C) ferner aufweist
einen Einrichtungsauthentifizierungsabschnitt (61), der angepasst ist zum Durchführen einer gegenseitigen Authentifizierung mit der Endgeräteinrichtung (11, 12, 13, 14) basierend auf der in dem Speicher (75) gespeicherten Authentifizierungsinformation, und
einen Authentifizierungsabschnitt für ein externes System, der angepasst ist zum Durchführen einer Authentifizierungsverarbeitung des externen Systems (20) mit der IC-Karte, wenn eine gegenseitige Authentifizierung mit der Endgeräteinrichtung erfolgreich durchgeführt worden ist,
einen Vorrichtungsauthentifizierungsabschnitt (61), der angepasst ist zum Durchführen einer gegenseitigen Authentifizierung mit einer Vorrichtung (32, D), mit der die Endgeräteeinrichtung ausgestattet ist, wobei die Vorrichtung (32, D) ein Modul ist, das der Hauptkörper der Endgeräteinrichtung (11, 12, 13, 14) aufweist, und/oder eine externe Vorrichtung, die mit dem Hauptkörper der Endgeräteinrichtung (11, 12, 13, 14) verbunden ist,
einen Speicherabschnitt, der angepasst ist zum Speichern von Daten (54), die Information (41, 45, 55) über die Endgeräteeinrichtung und die Vorrichtung (32, D) aufweist, die eine erfolgreiche gegenseitige Authentifizierung für die IC-Karte (C) durchgeführt haben,
einen Senderabschnitt, der angepasst ist zum Senden von Daten (54) an das externe System (20) über die Endgeräteinrichtung, wenn die Authentifizierungsverarbeitung des externen Systems (20) mit der IC-Karte erfolgreich durchgeführt worden ist.

2. IC-Karte (C) nach Anspruch 1, ferner mit einem Kodierungsmodul (53), das angepasst ist zum Durchführen eines Kodierungsprozesses oder eines Dekodierungsprozesses für Daten, indem Schlüsselinformation (52) verwendet wird,
wobei der Speicher (76) angepasst ist zum Speichern der Schlüsselinformation (52), die von dem Kodierungsmodul (53) für den Kodierungsprozess oder den Dekodierungsprozess verwendet wird, und der Einrichtungsauthentifizierungsabschnitt (61) angepasst ist zur gegenseitigen Authentifizierung für die Endgeräteinrichtung (11, 12, 13, 14) basierend auf dekodierten Daten oder Daten, die durch Verwendung der Schlüsselinformation (52), die in dem Speicher (76) gespeichert sind, durch Verwendung des Kodierungsmoduls (53) kodiert worden sind.

3. IC-Karte (C) nach Anspruch 1 oder 2, ferner mit einem Suchabschnitt (61), der angepasst ist zum Suchen nach dem Modul (32), das mit der IC-Karte (C) gegenseitig zu authentifizieren ist, unter Modulen der Endgeräteinrichtung (11, 12, 13, 14), wenn die gegenseitige Authentifizierung für die Endgeräteinrichtung (11, 12, 13, 14) durch den Einrichtungsauthentifizierungsabschnitt (61) erfolgreich durchgeführt worden ist,
wobei der Vorrichtungsauthentifizierungsabschnitt (61) angepasst ist zum Durchführen einer wechselseitigen Authentifizierung für das Modul (32), nach dem durch den Suchabschnitt (61) gesucht worden ist.

4. IC-Karte (C) nach einem der Ansprüche 1 bis 3, ferner mit einem Suchabschnitt (61), der angepasst ist zum Suchen nach der externen Vorrichtung (D), die erforderlich ist zur gegenseitigen Authentifizierung bezüglich der IC-Karte (C), die mit der Endgeräteinrichtung (11, 12, 13, 14) verbunden ist, wenn die gegenseitigen Authentifizierung für die Endgeräteinrichtung (11, 12, 13, 14) durch den Einrichtungsauthentifizierungsabschnitt (61) erfolgreich durchgeführt worden ist,
wobei der Vorrichtungsauthentifizierungsabschnitt (61) angepasst ist zum Durchführen einer gegenseitigen Authentifizierung für die externe Vorrichtung (D), nach der durch den Suchabschnitt (61) gesucht worden ist.

5. Endgeräteinrichtung (11, 12, 13, 14), die eine Funktion zur Kommunikation mit einem externen System (20) aufweist, mit:
einem Hauptkörper mit einer Schnittstelle (31), auf der eine IC-Karte (C) montiert ist,
einem Speicherabschnitt (36), in dem Authentifizierungsinformation gespeichert ist, **gekennzeichnet durch**
einen Authentifizierungsabschnitt (35), der angepasst ist zum Durchführen eines Prozesses für eine gegenseitige Authentifizierung mit der auf der Schnittstelle (31) montierten IC-Karte (C), basierend auf der in dem Speicher (36) gespeicherten Authentifizierungsinformation,
eine Vorrichtung (32, D) mit einer Funktion zur gegenseitigen Authentifizierung mit der IC-Karte (C), wobei die Vorrichtung (32, D) ein Modul ist, das der Hauptkörper der Endgeräteinrichtung (11, 12, 13, 14) aufweist und/oder eine externe Vorrichtung, die mit dem Hauptkörper der Endgeräteinrichtung (11, 12, 13, 14) verbunden ist,
einen Kommunikationssteuerungsabschnitt (37), der angepasst ist zum Steuern der Datenkommunikation mit der IC-Karte (C) und dem externen System (20) zur Durchführung eines Authentifizierungsprozesses für die IC-Karte (C) **durch** das externe System (20) basierend auf dem Ergebnis der gegenseitige Authentifizierung mit der IC-Karte (C) und Endgeräteinrichtung (11, 12, 13, 14) und der Authentifizierungsinformation der IC-Karte (C), und
zum Steuern der Übertragung von Daten von der IC-Karte (C) an das externe System (20), wobei die Daten Information über die Endgeräteinrichtung (11, 12, 13, 14) und die Vorrichtung (32, D) aufweist, die erfolgreich gegenseitige für die IC-Karte (C) authentifiziert worden sind, und die Übertragung der Daten durchgeführt wird, wenn die gegenseitige Authentifizierung mit dem externen System (20) erfolgreich durchgeführt worden ist.

6. Kommunikationssystem mit:
einer Endgeräteinrichtung (11, 12, 13, 14) nach Anspruch 5, und
einer IC-Karte (C) nach einem der Ansprüche 1 bis 4.

## Revendications

1. Carte de circuit IC (C) apte à être montée sur un corps principal d'un équipement terminal (11, 12, 13, 14) présentant une fonction de communication avec un système externe (20), comprenant :
une mémoire (75) apte à stocker des informations d'authentification, **caractérisée en ce que** la carte de circuit IC (C) comporte en outre :
une section d'authentification d'équipement (61) apte à mettre en oeuvre une authentification mutuelle avec l'équipement terminal (11, 12, 13, 14) sur la base des informations d'authentification stockées dans la mémoire (75) ; et
une section d'authentification de système externe apte à mettre en oeuvre un traitement d'authentification du système externe (20) avec la carte de circuit IC, lorsque l'authentification mutuelle avec l'équipement terminal a été mise en oeuvre avec succès ;
une section d'authentification de dispositif (61) apte à mettre en oeuvre une authentification mutuelle avec un dispositif (32, D) dont l'équipement terminal est équipé, dans laquelle le dispositif (32, D) est un module dont est doté le corps principal de l'équipement terminal (11, 12, 13, 14) et/ou un dispositif externe connecté au corps principal de l'équipement terminal (11 12, 13, 14) ;
une section de stockage apte à stocker des données (54) incluant des informations (41, 45, 55) sur l'équipement terminal et le dispositif (32, D) ayant mis en oeuvre avec succès l'authentification mutuelle pour la carte de circuit IC (C) ;
une section d'émetteur apte à transmettre les données (54) au système externe (20) par l'intermédiaire de l'équipement terminal, si le traitement d'authentification du système externe (20) avec la carte de circuit IC a été mis en oeuvre avec succès.

2. Carte de circuit IC (C) selon la revendication 1, comprenant en outre un module de codage (53), apte à mettre en oeuvre l'un parmi un processus de codage et un processus de décodage de données, en utilisant des informations de clé (52) ;
dans laquelle la mémoire (76) est apte à stocker les informations de clé (52) utilisées pour l'un parmi le processus de codage et le processus de décodage par le module de codage (53), et la section d'authentification d'équipement (61) est apte à mettre en oeuvre une authentification mutuelle pour l'équipement terminal (11, 12, 13, 14) sur la base de l'une parmi des données décodées et des données codées, en faisant appel aux informations de clé (52) stockées dans la mémoire (76) au moyen du module de codage (53).

3. Carte de circuit IC (C) selon la revendication 1 ou 2, comprenant en outre une section de recherche (61) qui est apte à rechercher le module (32), à authentifier mutuellement pour la carte de circuit IC (C), parmi des modules de l'équipement terminal (11, 12, 13, 14), lorsqu'une authentification mutuelle pour l'équipement terminal (11, 12, 13, 14), est mise en oeuvre avec succès par la section d'authentification d'équipement (61) ;
dans laquelle la section d'authentification de dispositif (61) est apte à mettre en oeuvre une authentification mutuelle pour le module (32) recherché par la section de recherche (61).

4. Carte de circuit IC (C) selon l'une quelconque des revendications 1 à 3, comprenant en outre une section de recherche (61) qui est apte à rechercher le dispositif externe (D) devant être authentifié mutuellement en ce qui concerne la carte de circuit IC (C) connectée à l'équipement terminal (11, 12, 13, 14), lorsqu'une authentification mutuelle pour l'équipement terminal (11 12, 13, 14), est mise en oeuvre avec succès par la section d'authentification d'équipement (61) ;
dans laquelle la section d'authentification de dispositif (61) est apte à mettre en oeuvre une authentification mutuelle pour le dispositif externe (D) recherché par la section de recherche (61).

5. Équipement terminal (11, 12, 13, 14) présentant une fonction de communication avec un système externe (20), comprenant :
un corps principal présentant une interface (31) sur laquelle est montée une carte de circuit IC (C) ;
une section de mémoire (36) dans laquelle sont stockées des informations d'authentification,
**caractérisé par** :
une section d'authentification (35) apte à mettre en oeuvre un processus d'authentification mutuelle avec la carte de circuit IC (C) montée sur l'interface (31), sur la base d'informations d'authentification stockées dans la mémoire (36) ;
un dispositif (32, D) présentant une fonction d'authentification mutuelle avec la carte de circuit IC (C), dans lequel le dispositif (32, D) est un module dont est doté le corps principal de l'équipement terminal (11, 12, 13, 14) et/ou un dispositif externe connecté au corps principal de l'équipement terminal (11 12, 13, 14) ;
une section de commande de communication (37) apte à commander une communication de données avec la carte de circuit IC (C) et le système externe (20) en vue de mettre en oeuvre un processus d'authentification pour la carte de circuit IC (C), par le biais du système externe (20), sur la base du résultat de l'authentification mutuelle avec la carte de circuit IC (C) et l'équipement terminal (11 12, 13, 14), et d'informations d'authentification de la carte de circuit IC (C) ; et
apte à commander une transmission de données, de la carte de circuit IC (C) au système externe (20), les données incluant des informations sur l'équipement terminal (11, 12, 13, 14) et le dispositif (32, D) qui ont mis en oeuvre avec succès une authentification mutuelle pour la carte de circuit IC (C), et la transmission de données étant mise en oeuvre lorsque l'authentification mutuelle avec le système externe (20) a été mise en oeuvre avec succès.

6. Système de communication comprenant :
un équipement terminal (11, 12, 13, 14) selon la revendication 5 ; et
une carte de circuit IC (C) selon l'une quelconque des revendications 1 à 4.
